# EUROPEAN PATENT SPECIFICATION

(11) **EP 2 766 940 B1**
(45) Date of publication and mention of the grant of the patent: **22.04.2020**
(21) Application number: 11770736.4
(22) Date of filing: 11.10.2011
(51) Int. Cl.: H01M 2/02, H01M 2/10, H01M 10/12, H01M 10/16

(54) **CASE SYSTEM, BATTERY AND BATTERY RACK WITH IMPROVED STACKING**
GEHÄUSESYSTEM, BATTERIE UND BATTERIEPACKUNG MIT VERBESSERTER STAPELUNG
SYSTÈME DE BAC, ACCUMULATEUR ET BLOC D'ÉLÉMENTS À EMPILEMENT AMÉLIORÉ

(43) Date of publication of application: 20.08.2014
(73) Proprietor: Zhejiang Narada Power Source Co. Ltd., Provinz Zhejiang PRC (CN)
(72) Inventor: CHEN, Jian, Hangzhou Zhejiang (CN); WANG, De Li, Zhejiang (CN)
(74) Representative: Troesch Scheidegger Werner AG
(86) International application number: PCT/EP2011/067745
(87) International publication number: WO 2013/053386

(56) References cited:
- EP-A2- 0 854 525
- WO-A1-2011/001581
- WO-A2-02/45200
- GB-A- 1 367 697
- US-A- 4 603 093
- US-A- 5 686 202
- US-A- 5 695 891
- US-A1- 2002 012 835

## Description

The present invention relates to a case system for lead batteries, a lead battery and a lead battery rack layout according to the preambles of the independent claim 1.

Lead batteries are a common type of battery, where the electrodes are composed of lead and/or lead dioxide and the electrolyte is formed by sulfuric acid. A lead battery essentially is made up of an acid resistant case and at least two sheets of lead of which one functions as a positive, whereas the other functions as a negative electrode.

The sheets are submersed into a sulfuric acid solution. This most generic type of lead battery is equipped with a gas opening at the top to prevent gas pressure build up.Gas pressure increases, when hydrogen and oxygen are produced through electrolysis.

Understandably such batteries can only be stored and operated in an orientation that ensures that the gas opening is on the top of the case, such as to ensure venting and prevent spilling of the acid. They require refilling with H₂O on a regular basis.

One particular type of lead batteries, so called VRLA type batteries (Valve Regulated Lead Acid Battery) are sealed with a pressure regulating valve and do not require a refilling of water to keep the battery functioning.

Furthermore, such batteries can be designed with absorbent glass mats to have the acid in an absorbed state on glass fibers. These types of lead batteries have significant advantages as they can be operated in any orientation and have a reduced maintenance requirement, i.e. no refilling of H₂O is necessary.

One commonly used design is the so-called 19 inch or 23 inch rack system with the battery terminals accessible from the front. Four individual 12V batteries are arranged such as to fit a 19-inch or 23-inch wide and 400 or 600mm deep drawer of an electrical cabinet or rack. These elements are configured such as to present the terminal accesses at the frontside. Cases adapted for racks in the 19 inch/ 23 inch front access layout have an essentially box shaped case element with 6 compartments in a 2 x 3 configuration (i.e. two rows of three compartments) for the electric cells and a cover for the terminals. The electrical cells are placed into the compartments, such as to extend top down inwardly into the compartments and presenting their individual terminals on the topside.

This configuration has been found to carry a number of disadvantages. For one part, the top down arrangement of the cell leads, due to the large vertical height of the cells, to stratification of the sulfuric acid, which in turn leads to a decrease in capacity and service life of the battery. Furthermore, as both terminals of the electrical cells are on the same side of the cell plate, the ohmic losses in the plate cause that the effective and reactive surface is restricted to the upper third of the electrical cell. One further disadvantage in respect to said set up is a consequence of the 2 x 3 arrangement of the compartments. It requires comparatively thicker outside sidewalls of the individual cells so to keep up the compression of the absorbent glass mat between the plates, especially when operating the battery at high temperatures.

A further disadvantage is that the cabling and connection of the individual batteries in a rack is complicated and prone to short circuits. US4603093 discloses a case system for lead batteries with a housing part with compartments, an access wall comprising gas valves and a closure wall part. EP0854525 discloses a case system with six compartments. WO0245200 discloses a leaad acid battery case comprising a valve in the center of the cover.

It was thus an object of the present invention to provide a solution to the problems of the state of the art. It was a particular object of the present invention to provide a case system, a battery and a battery rack layout that is easy and cheap to produce and has an improved service life and capacity as well as easier to install compared to the state of the art.

The problem is solved with a case system for lead
batteries, a lead battery and a battery rack layout
according to the characterizing portions of independant claim 1.

One aspect of the present invention relates to a case system for lead batteries. The case system comprises a one piece, essentially box shaped cell housing part with at least four sidewalls. In the context of the present invention, a one-piece cell housing part shall mean that said cell-housing part has been manufactured in as a monolithic way. An exemplary suitable manufacturing process to produce such a one-piece cell housing part would be injection molding. The cell housing part is thus integrally formed. In the context of the present invention, essentially box shaped means that the said cell housing part has a roughly rectangular shape with a height, a length and a depth such as to encompass a volume. The essentially box shaped cell housing has at least four sidewalls. The four sidewalls enclose an interior volume. At least two of the four sidewalls are arranged in parallel to each other. Said interior volume is further divided. The cell housing part comprises at least one division plane for dividing said interior volume, such that a plurality of compartments is formed. Each of said compartments is adapted for storing an electrical cell or element. The case system according to the present invention further comprises an access wall part with electrical conductor (terminals) feed throughs. The access wall part further comprises at least one fluid channel opening. Preferably it comprises a gas opening. The cases according to the present invention further comprise a closure wall part for sealing off the casing system.

In a preferred embodiment the case system is configured such that the access wall part and the closure wall part are two opposing walls of an essentially box shaped case system, whose main body is formed by an essentially box shaped cell housing part.

In a preferred embodiment, the four sidewalls are outer walls of cell housing part.

The closure wall part is used to seal off the front facing away from the access wall part. The box shaped cell housing further comprises division planes on the inside forming compartments.

Each of the at least one division planes is essentially perpendicular to the same two opposite sidewalls of the essentially box shaped cell housing.

The case system according to the present invention provides a series of advantages. The compartments are constructed to hold the electrical cells with the plates in an orientation that is parallel to the surface the case system is placed on. By having the plates in a horizontal orientation, the path for vertical migration and stratification of the sulfuric acid in the space between the lead sheets of the electrical cell or element is reduced from about 200mm as in the state of the art for a standard 19" battery or from 250mm in a 23" standard battery to almost negligible 2mm or less in the present invention

One further advantage of the present invention is the provision of an increased volume inside the compartments that can be used by the electrical cells. It is known that during operation the absorbent glass mat in the element requires compression especially at higher temperatures. To ensure continued compression also at higher operation temperatures, the exterior sidewalls of the compartments, have to be reinforced and thus produced with an increased wall thickness. This reduces the volume available for the internal cell parts and increases manufacturing and parts cost.

The case system according to the present invention reduces the lengthwise walls of the compartments in contact with each other. As the walls between compartments are comparatively shorter with the case system according to the present invention, less material needs to be used for stabilizing the walls between the compartments. This directly leads in an increase of compartment volume, where the operative parts, i.e. the plates are stored as well as to lower material and manufacturing costs.

In a preferred embodiment, the interior volume is divided into 6 compartments by means of 5 division planes. The division planes are preferably arranged in parallel to each other.

The case system is adapted to hold an electrical cell or element in each compartment.

Said electrical cell or element is furthermore adapted to be operated in a horizontal orientation.

Electrical cells applicable for the present invention are made of lead sheets separated by absorbent glass fiber sheets saturated with acid electrolyte. Preferably, the plates are configured to have a positive (+) terminal on one side of the short edge of the plate and a negative (-) terminal at the opposite short edge of the plate. In a preferred embodiment such plates would be devised to have a length of 395 mm to 550mm, preferably 320mm to 480mm. The width of the plates ranges from 105mm to 125mm, preferably 95mm to 115mm
In a further preferred embodiment, the electrical conductor openings are located at opposite ends of the access wall part. The access wall part can be arranged as a plate of essentially rectangular shape. The plate as such would be adapted to fit onto the box shaped cell housing part and to serve as a cover of an opening of said essentially box shaped cell housing part on one side. In the context of the present invention the conductor or terminal feed-through would be located at opposite ends of the access wall part and on a symmetrical axis drawn across the middle point of the access wall part.

In a preferred embodiment, the fluid, respectively preferred gas channel opening comprises at least one gas vent with a valve.

Suitable valves and gas vents for lead batteries with acid electrolyte are discretional for the skilled artisan.

In a preferred embodiment, the fluid, respectively preferably gas channel opening is located essentially at the central point of the access wall plate. This central point can be defined in an analogous manner as above, i.e. as the middle point of the plate.

According to the invention, the access wall part is shaped as a cover panel with a shape adapted to fit the cell housing part. The access wall part has a first proximal surface, facing outwards, when the case system is fully assembled, and a second distal surface, facing the inside when the case system is fully assembled.

The access wall part has a plurality of gas valves. Even more preferably the access wall part has as many gas valves as the cell housing part has compartments, preferably it has six gas valves. The access wall part furthermore has a gas-collecting duct on the proximal surface.

In a preferred embodiment the box shaped cell-housing part, the access wall part and the closure wall part are separately prefabricated parts. Preferably, they are integral parts.

The injection molding process can be simplified and unwanted mold core movement/deflection during the injection molding, resulting in uneven thickness of the case walls, can be prevented.

The case system can be sealed with a hot plate welding technique or by gluing and any remaining cell cavities can be packed with adapted fillers.

One aspect of the present invention relates to a lead battery. The lead battery comprises a case system as previously described. It is self evident that such a case system can comprise any combination of features described above as preferred embodiments. The case system for a lead battery according to the present invention would at least comprise a one piece, essentially box shaped cell-housing part with at least four sidewalls. The sidewalls enclose an interior volume. The box shaped cell housing part has at least one division plane, dividing said interior volume, such as to form a plurality of compartments. Each of the plurality of compartments is adapted for storing an electrical cell or element. The case system further comprises an access wall part with electrical conductor openings or terminal feed throughs and at least one fluid channel opening. The case system further comprises a closure wall part for sealing off the casing system. Each of the at least one division planes is essentially perpendicular to the same two opposites sidewalls of the essentially box shaped cell housing. The lead battery according to the present invention further comprises at least one electrical cell stored in each compartment. Each electrical cell further comprises a plurality of stacked lead and absorbent glass fiber sheets and an electrolyte. Each electrical cell has a negative (-) terminal and a positive (+) terminal.

In a preferred embodiment the negative (-) terminal is positioned opposite of the positive (+) terminal on the electrical cell in respect to a plane in which the lead sheets of the electrical cells are arranged.

In a preferred embodiment the electrolyte is fixed in a matrix. In an even more preferred embodiment the holding matrix is an absorbent fiber mat or highly dispersed silica, even more preferably a glass fiber mat. In a preferred embodiment the electrical cells are stored in each compartment alternatingly in respect to the orientation of the terminals. This means that a first electrical cell or element can be placed in the compartment such that the positive (+) terminal faces one direction whereas its negative (-) terminal faces the opposite direction. The successive element or cell is stacked in the next compartment in such a fashion, that its terminal orientation is the opposite of the orientation of the previous. With this opposite terminal orientation arrangement within a cell or element the effects of ohmic losses in the plate group are minimized and a more even current distributions achieved thereby increasing the effective capacity of the battery.

In a preferred embodiment the case system has 6 compartments and each is equipped with an electrical cell or element, such that six electrical cells are in the lead battery.

In a further preferred embodiment the electrical cells are placed in a horizontal, so called *"pancake"* orientation. In operation the case is placed in a horizontal direction. The length for stratification of the acid is preferably not more than 3mm, preferably less. Stratification is limited to the thickness of the absorbent glass fiber sheets.

One further aspect of the present invention is a lead battery layout and associated dimension comprising at least two lead batteries as described above. Said lead batteries can be mounted either in series or in parallel and four units would fit within the 19" or 23" wide and 400mm or 600mm deep battery tray.

The present invention shall be further described by means of drawings and specific examples on the following pages. Further advantages and embodiments become evident to a person of ordinary skill in the art by reviewing these. The invention shall not be limited to these examples.
Figure 1a is a schematic drawing of the layout of electrical cells in a case system of the state of the art.
Figure 1b is a schematic drawing of the layout of electrical cells in a case system according to the present invention.
Figure 2 is a schematic drawing of a battery according to the present invention.
Figure 3 is a schematic drawing of an electrical cell adapted for use with the present invention.
Figure 4 is a schematic drawing of a battery according to the present invention with a removed front access plate.
Figure 5 is a schematic drawing of a battery according to the present invention with a removed back cover plate.
Figure 6 is a schematic drawing of a lead battery rack consisting of 4 batteries connected according to the present invention and filling a 482.6 mm (19") or 584.2 mm (23") battery tray.
Figure 7a is a schematic drawing of a lead battery rack wherefore two time two lead batteries according to the present invention are connected in parallel.
Figure 7b is a schematic drawing wherefore two times two lead batteries are connected in parallel according to the state on the art.
Figure 8a shows a schematic drawing of a two-level rack of batteries according to the present invention.
Figure 8b shows a two-level rack of lead batteries that are connected as in the state of the art.

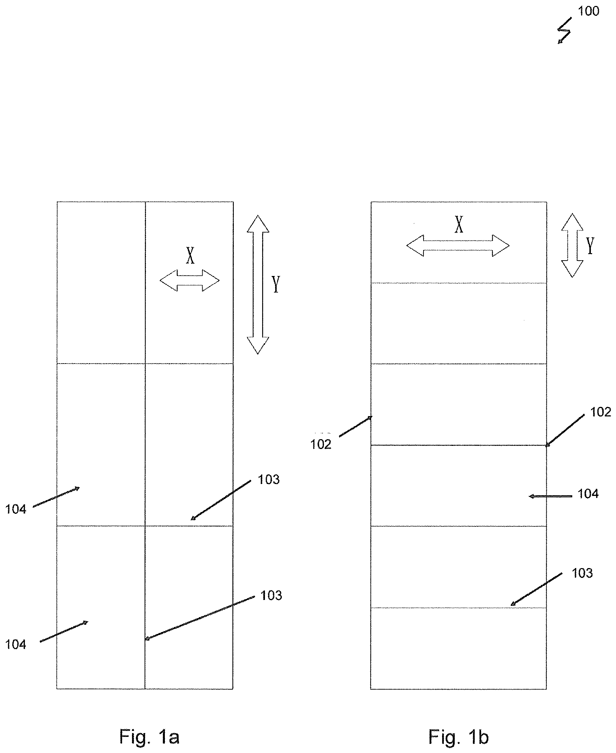

Figure 1a shows a compartmentation as used in the state of the art batteries.

The batteries have six cell compartments in a two times three configuration, meaning that two rows of three compartments are placed in parallel to each other and divided by division planes 103. Each cell compartment 104 has a width x and a length y. In a typical state of the art battery the length y is 131mm and the inside width x is 45mm.

For ensuring an adequate compression of the absorbent glass mat in the element during operation, the wall over the whole length y needs to be very strong and stable.

Figure 1b shows a case system 100 with a compartment configuration according to the present invention. Six compartments, each with an inside width x of 95mm and a length y of 65.8mm are stacked onto one another, such that all division planes are in parallel to each other or perpendicular to the same two opposite side walls 102.

The edge requiring a reinforced wall for ensuring adequate compression during operation is the width x of 105mm times two walls, and therefore considerably smaller than the six walls with 131mm edge as shown in figure 1a. Thereby, an increase in volume can be accomplished without increasing the overall size of the case. This also allows saving on wall material and thus manufacturing and material costs.

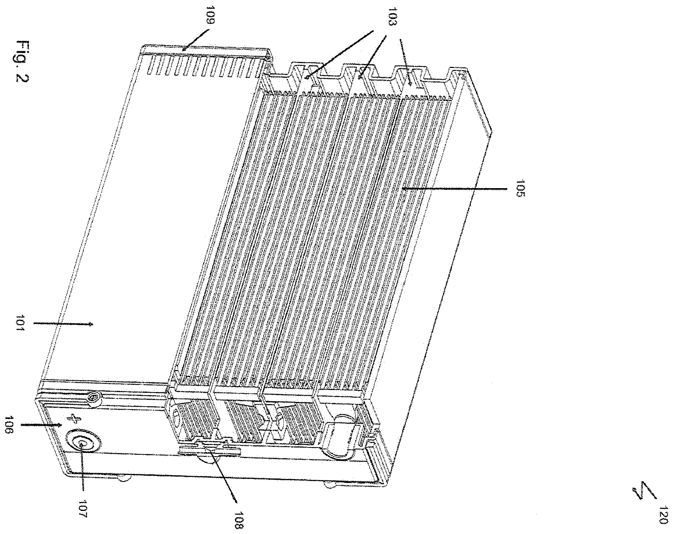

Figure 2 shows a battery 120 according to the present invention. The battery has a housing part 101, which is shown with a cut off window for representation purposes. It has an interior volume divided by 5 division planes 103 such as to form six compartments into which an electrical cell or element 105 can be placed. The housing part 101 is sealed off on the front side by an access wall part 106 with electrical conductor openings or terminal feed throughs 107 and a fluid, respectively gas channel opening 108 for the gas release and a gas valve (not shown). The back part is sealed with a closure wall part 109.

The housing part 101, the access wall part 106 and the closure wall part 109 can be manufactured of suitable plastic such as SAN,ABS,PC, PP or mixtures thereof, for example.

The electrical cells 105 are lead sheet acid absorbent glass mat cells. The electrical cells 105 are placed in the case system 100, such that one terminal faces the access wall part 106 and the opposite terminal faces the closure wall part 109.

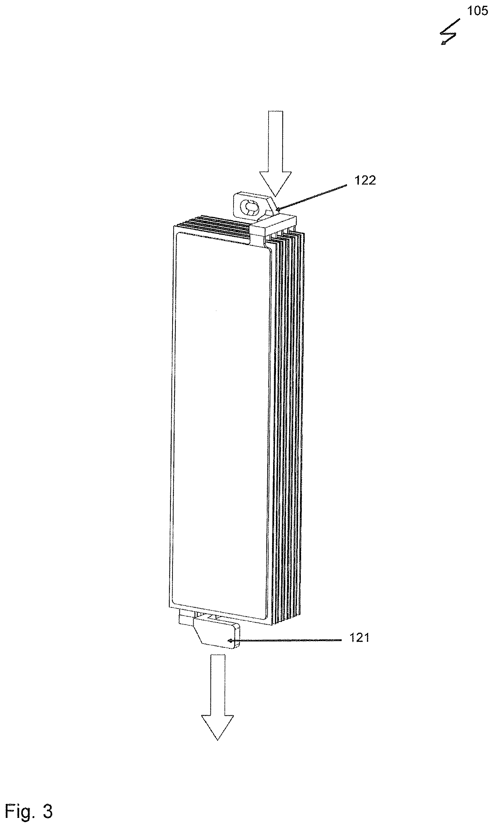

Figure 3 shows an electrical cell 105 as employed in the battery described in figure 2.

The electrical cell consists of a plurality of stacked lead sheets separated with absorbent glass fiber mat saturated with electrolyte, whereby the electrolyte in the present electrical cell 105 is sulfuric acid of a concentration of 32% in weight, for example.

The electrical cell 105 has a positive terminal (+) 122 and a negative terminal (-) 121. The terminals are located at opposite ends of the electrical cell 105 in the same plane as of the lead sheets.

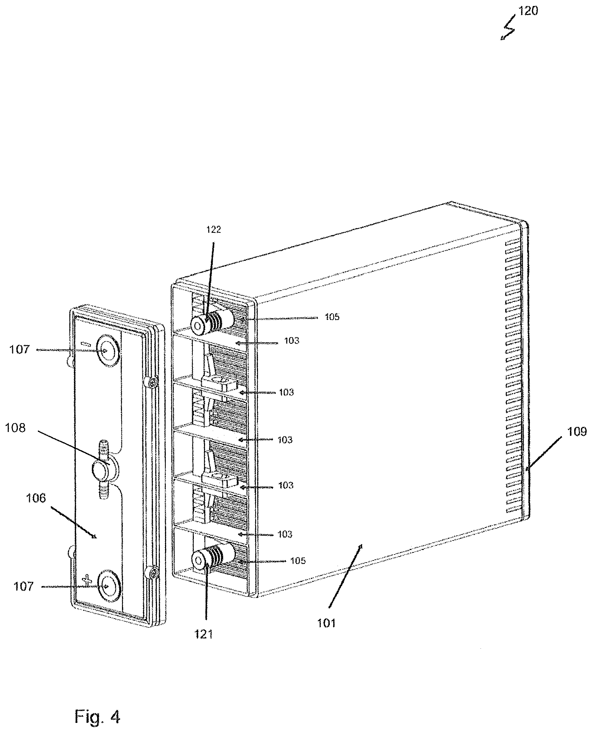

Figure 4 shows a lead battery according to the present invention with the front access parts removed and the closure wall part affixed to the box shaped cell-housing part 101. The cell housing part has five parallel division planes 103 subdividing the internal volume into six compartments into which an electrical cell or element 105 can be placed. The access wall part 106 has electrical conductor openings or terminal feed throughs 107 through which adequate electrical contact can be made to the positive cell terminal 122, or the negative terminal 121 respectively. The front access wall part 106 further has six gas pressure regulation valves and a central gas collection duct (not shown) on the back side (the part facing the electrical cells when mounted) connected to the gas channel opening 108.

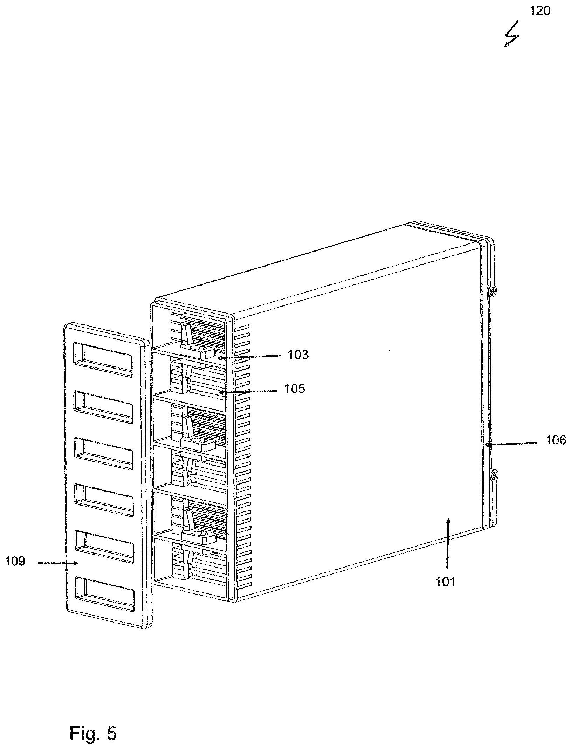

Figure 5 shows a schematic drawing in perspective from the backside of the battery 120 of figure 4 with the same five division planes 103 and the electrical cells 105 in the respective compartments. In contrast to figure 5, the closure wall part 109 is removed from the case system enclosing the electrical cells 105.

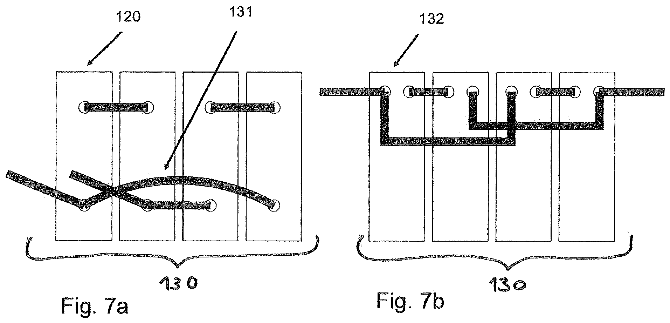

Figure 7a shows how a series of four battery units 120 according to the present invention can be connected in parallel. Four 12V batteries according to the present invention can be linked in parallel with simple flexible cable connectors 131.

By means of comparison, an equally parallel linked rack 130 of four batteries 132 of the state of the art is shown. The batteries cannot be linked without having to use special shaped solid and rigid connectors.

By this means, a safer, cheaper and easier way of connecting four 12V batteries to a 2 x 24V chain in parallel is provided.

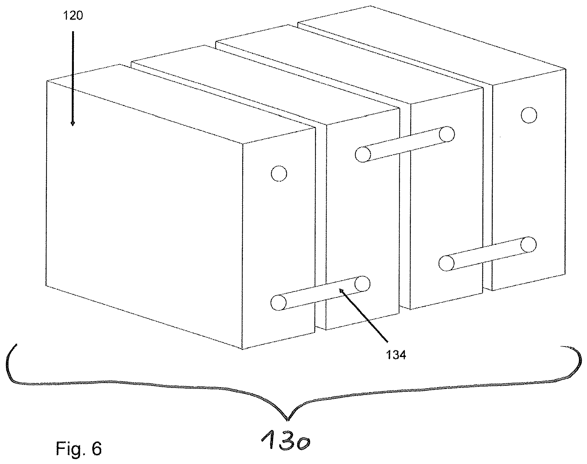

Figure 6 shows a battery rack 130 consisting of four lead batteries 120 of a valve regulated lead absorbent glass mat type, configured according to the present invention. The set up of the front access terminals enables connecting the four batteries 120 by means of an easy to use low cost, low profile, rigid and insulated battery connector 134 made from copper.

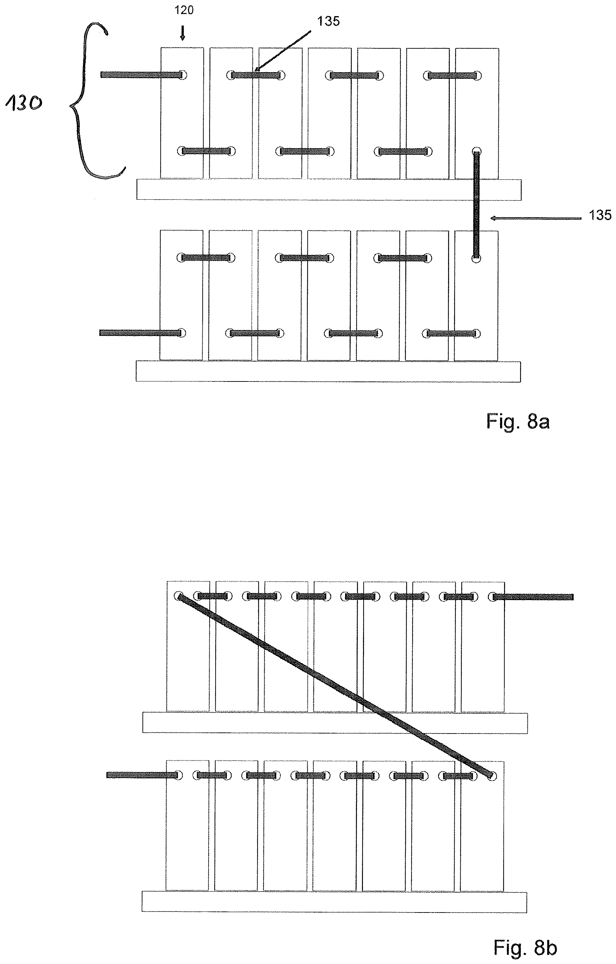

Figure 8a shows a rack 130 equipped with 14 lead batteries 120 according to the present invention.

The figure shows how easy it is to connect the batteries 120 by means of the connection means 135 with the front terminal layout according to the present invention.

For comparison, figure 8b shows a configuration of 14 batteries connected as required in the state of the art. The intertier connection of the state of the art batteries requires a long cable and is associated with danger of short circuits due to the proximity of the intercell connector position with the metallic rack.

## Claims

1. Case system (100) for lead batteries, comprising:
a) a one-piece, essentially box shaped cell housing part (101) with at least four side walls (102) enclosing an interior volume and at least one division plane (103), dividing said interior volume, such as to form a plurality of compartments (104), each for storing an electrical cell or element (105);
b) an access wall part (106) with electrical conductor openings or terminal feed throughs (107) and at least one fluid channel opening (108) ;
c) a closure wall part (109) for sealing off said casing system (100),
wherein at least two of the side walls (102) arranged in parallel to each other, and each of the at least one division planes (103) is essentially perpendicular to said two opposite side walls (102) of the essentially box shaped cell housing, and
the compartments (104) are oriented such to hold an electrical cell (105) with lead sheets each, such that the lead sheets are arranged in an horizontal orientation,
whereby the access wall part (106) is shaped as a cover panel (106) with a shape adapted to fit the cell housing part (101), and whereby the access wall part (106) has a first proximal surface, facing outwards when the case system (100) is fully assembled, and a second distal surface, facing the inside when the case system (100) is fully assembled, and the access wall part (106) has a plurality of gas valves, in
particular six gas valves, and **characterised by** a gas collecting duct on the proximal surface.

2. Case system (100) according to claim 1, whereby the interior volume is divided into six compartments (104) by means of five division planes (103) that are arranged in parallel to each other.

3. Case system (100) according to claim 1 or 2, whereby the electrical conductor openings or terminal feed throughs (107) are located at opposite ends of the access wall part (106).

4. Case system (100) according to any one of claims 1 to 3, whereby the fluid channel opening (108) comprises a gas vent with a valve.

5. Case system (100) according to claim 4, whereby the fluid channel opening (108) is located essentially at the central point of the access wall plate (106).

6. Case system (100) according to any one of claims 1 to 5, whereby the box shaped cell housing part (101), the access wall part (106) and the closure wall part (109) are separate prefabricated parts.

7. Lead battery (120) comprising:
a case system (100) according to claim 1 with at least one compartment (104);
at least one electrical cell (105) stored in each compartment (104), each electrical cell (105) comprising a plurality of stacked lead sheets and absorbent glass fiber mat saturated with an electrolyte and whereby each electrical cell has a negative (-) terminal (121) and a positive (+) terminal (122).

8. Lead battery (120) according to claim 7, whereby the negative (-) terminal (121) and the positive (+) terminal (122) are positioned on opposite edges of the electrical cell (105) on a plane in which the lead sheets of the electrical cell (105) are arranged.

9. Lead battery (120) according to claim 7 or 8, whereby the electrolyte is in a matrix, preferably in an absorbent fiber mat.

10. Lead battery (120) according to any one of claims 7 to 9, whereby the electrical cells are stored in each compartment (104) alternatingly in respect to the polarity of the cell terminal.

11. Lead battery (120) according to claim 10, whereby the electrical cells (105) are stacked such that alternating the positive (+) terminal (121) faces one direction and a positive (+) terminal (121) of the successive electrical cell (105) in the stack faces the opposite direction.

12. Lead battery (120) according to any one of claims 7 to 11, whereby the case system has six compartments and each is equipped with an electrical cell or element (105), such that six electrical cells or elements are stacked in the lead battery (120).

13. Lead battery layout according to claim 12, comprising four lead batteries (120) adapted to fit within the 482.6 mm or 584.2 mm wide and 400mm or 600mm deep battery tray.

## Patentansprüche

1. Gehäusesystem (100) für Bleibatterien, umfassend:
a) ein einteiliges, im wesentlichen kastenförmiges Zellengehäuseteil (101) mit mindestens vier Seitenwänden (102), die ein Innenvolumen einschliessen, und mindestens einer Unterteilungsebene (103), welche das Innenvolumen unterteilt, um eine Vielzahl von Fächern (104) zu bilden, die jeweils eine elektrische Zelle oder ein elektrisches Element (105) aufnehmen;
b) ein Zugriffswandteil (106) mit Öffnungen für elektrische Leiter oder Anschlussdurchführungen (107) und mindestens einer Fluidkanalöffnung (108);
c) ein Verschlusswandteil (109) zum Abdichten des Gehäusesystems (100),
wobei mindestens zwei der parallel zueinander angeordneten Seitenwände (102) und jede der mindestens einen Unterteilungsebenen (103) im Wesentlichen senkrecht zu den zwei gegenüberliegenden Seitenwänden (102) des im Wesentlichen kastenförmigen Zellengehäuses stehen, und
wobei die Fächer (104) so ausgerichtet sind, dass sie eine elektrische Zelle (105) mit jeweils Bleiplatten derart halten, dass die Bleiplatten in horizontaler Ausrichtung angeordnet sind,
wobei das Zugriffswandteil (106) als eine Abdeckplatte (106) mit einer Form geformt ist, die an das Zellengehäuseteil (101) angepasst ist, und wobei das Zugriffswandteil (106) eine erste proximale Fläche, die nach aussen zeigt, wenn das Gehäusesystem (100) vollständig zusammengebaut ist, und eine zweite distale Fläche aufweist, die nach innen zeigt, wenn das Gehäusesystem (100) vollständig zusammengebaut ist, und das Zugriffswandteil (106) mehrere Gasventile aufweist, insbesondere sechs Gasventile, und **gekennzeichnet durch**:
einen Gassammelkanal auf der proximalen Fläche.

2. Gehäusesystem (100) nach Anspruch 1, wobei das Innenvolumen mittels fünf parallel zueinander angeordneten Unterteilungsebenen (103) in sechs Fächer (104) unterteilt ist.

3. Gehäusesystem (100) nach Anspruch 1 oder 2, wobei die Öffnungen für elektrische Leiter oder die Anschlussdurchführungen (107) an gegenüberliegenden Enden des Zugriffswandteils (106) angeordnet sind.

4. Gehäusesystem (100) nach einem der Ansprüche 1 bis 3, wobei die Fluidkanalöffnung (108) eine Gasentlüftung mit einem Ventil umfasst.

5. Gehäusesystem (100) nach Anspruch 4, wobei die Fluidkanalöffnung (108) im Wesentlichen am Mittelpunkt der Zugriffswandplatte (106) angeordnet ist.

6. Gehäusesystem (100) nach einem der Ansprüche 1 bis 5, wobei das kastenförmige Zellengehäuseteil (101), das Zugriffswandteil (106) und das Verschlusswandteil (109) separate vorgefertigte Teile sind.

7. Bleibatterie (120), umfassend:
ein Gehäusesystem (100) nach Anspruch 1 mit mindestens einem Fach (104);
mindestens eine elektrische Zelle (105), welche in jedem Fach (104) aufgenommen ist, wobei jede elektrische Zelle (105) mehrere gestapelte Bleiplatten und eine mit einem Elektrolyten gesättigte absorbierende Glasfasermatte umfasst, und wobei jede elektrische Zelle einen Minus (-) Anschluss (121) und einen Plus (+) Anschluss (122) aufweist.

8. Bleibatterie (120) nach Anspruch 7, wobei der Minus (-) Anschluss (121) und der Plus (+) Anschluss (122) an gegenüberliegenden Kanten der elektrischen Zelle (105) in einer Ebene angeordnet sind, in der die Bleiplatten der elektrischen Zelle (105) angeordnet sind.

9. Bleibatterie (120) nach Anspruch 7 oder 8, wobei sich das Elektrolyt in einer Matrix befindet, vorzugsweise in einer absorbierenden Fasermatte.

10. Bleibatterie (120) nach einem der Ansprüche 7 bis 9, wobei die elektrischen Zellen in jedem Fach (104) abwechselnd in Bezug auf die Polarität des Zellenanschlusses gelagert sind.

11. Bleibatterie (120) nach Anspruch 10, wobei die elektrischen Zellen (105) so gestapelt sind, dass abwechselnd der Plus (+) Anschluss (121) in eine Richtung zeigt und ein Plus (+) Anschluss (121) der nachfolgenden elektrischen Zelle (105) im Stapel in die entgegengesetzte Richtung zeigt.

12. Bleibatterie (120) nach einem der Ansprüche 7 bis 11, wobei das Gehäusesystem sechs Fächer aufweist und jedes mit einer elektrischen Zelle oder einem elektrischen Element (105) ausgestattet ist, so dass sechs elektrische Zellen oder Elemente in der Bleibatterie (120) gestapelt sind.

13. Bleibatterieanordnung nach Anspruch 12, umfassend vier Bleibatterien (120), die an das 482,6 mm oder 584,2 mm breite und 400 mm oder 600 mm tiefe Batteriefach angepasst sind.

## Revendications

1. Système de boîtier (100) pour batteries au plomb, comprenant :
a) une partie de logement de cellule (101) en forme essentiellement de boîte formée d'une seule pièce présentant au moins quatre parois latérales (102) définissant un volume intérieur et au moins un plan de séparation (103) qui divise ledit volume intérieur de façon à former une pluralité de compartiments (104), chaque compartiment étant conçu pour stocker une cellule ou un élément électrique (105) ;
b) une partie de paroi d'accès (106) avec des ouvertures pour conducteurs électriques ou des traversées de borne (107) et au moins une ouverture de canal de fluide (108) ;
c) une partie de paroi de fermeture (109) pour sceller ledit système de boîtier (100),
dans lequel au moins deux des parois latérales (102) sont disposées parallèles entre elles, et chacun des au moins un plan de séparation (103) est essentiellement perpendiculaire auxdites deux parois latérales opposées (102) du logement de cellule en forme essentiellement de boîte, et
dans lequel les compartiments (104) sont orientés de façon à tenir une cellule électrique (105) avec des feuilles de plomb, de sorte que les feuilles de plomb sont disposées à l'horizontal,
la partie de paroi d'accès (106) étant formée comme un panneau de couvercle (106) avec une forme adaptée pour coïncider avec la partie de logement de cellule (101), et la partie de paroi d'accès (106) ayant une première surface proximale dirigée vers l'extérieur lorsque le système de boîtier (100) est complètement monté, et une deuxième surface distale, dirigée vers l'intérieur lorsque le système de boîtier (100) est complètement monté, et la partie de paroi d'accès (106) ayant une pluralité de robinets de gaz, en particulier six robinets de gaz, et **caractérisé par** un canal collecteur de gaz sur la surface proximale.

2. Système de boîtier (100) selon la revendication 1, dans lequel le volume intérieur est divisé en six compartiments (104) par cinq plans de séparation (103) qui sont agencés parallèles entre eux.

3. Système de boîtier (100) selon la revendication 1 ou 2, dans lequel les ouvertures pour conducteurs électriques ou les traversées de borne (107) sont situées à des extrémités opposées de la partie de paroi d'accès (106).

4. Système de boîtier (100) selon l'une des revendications 1 à 3, dans lequel l'ouverture de canal de fluide (108) comprend un conduit de gaz avec un robinet.

5. Système de boîtier (100) selon la revendication 4, dans lequel l'ouverture de canal de fluide (108) est située essentiellement au centre de la partie de paroi d'accès (106).

6. Système de boîtier (100) selon l'une des revendications 1 à 5, dans lequel la partie de logement de cellule en forme de boîte (101), la partie de paroi d'accès (106) et la partie de paroi de fermeture (109) sont des parties préfabriquées séparées.

7. Batterie au plomb (120) comprenant :
- un système de boîtier (100) selon la revendication 1 avec au moins un compartiment (104) ;
- au moins une cellule électrique (105) stockée dans chaque compartiment (104), chaque cellule électrique (105) comprenant une pluralité de feuilles de plomb empilées et un mat de fibres de verre absorbant saturé avec un électrolyte, et dans laquelle chaque cellule électrique a une borne négative (-) (121) et une borne positive (+) (122).

8. Batterie au plomb (120) selon la revendication 7, dans laquelle la borne négative (-) (121) et la borne positive (+) (122) sont positionnées sur des bords opposés de la cellule électrique (105) sur un plan dans lequel sont disposées les feuilles de plomb de la cellule électrique (105).

9. Batterie au plomb (120) selon la revendication 7 ou 8, dans laquelle l'électrolyte est dans une matrice, de préférence dans un mat de fibres absorbant.

10. Batterie au plomb (120) selon l'une des revendications 7 à 9, dans laquelle les cellules électriques sont stockées dans chaque compartiment (104) en alternance au niveau de la polarité de la borne de la cellule.

11. Batterie au plomb (120) selon la revendication 10, dans laquelle les cellules électriques (105) sont empilées en alternance de façon à ce que la borne positive (+) (121) soit dirigée dans une direction et que la borne positive (+) (121) de la cellule électrique successive (105) dans la pile soit orientée dans la direction opposée.

12. Batterie au plomb (120) selon l'une des revendications 7 à 11, dans laquelle le système de boîtier a six compartiments, chacun étant équipé d'une cellule ou d'un élément électrique (105), de sorte que les six cellules ou éléments électriques sont empilés dans la batterie au plomb (120).

13. Agencement de batterie au plomb selon la revendication 12 comprenant quatre batteries au plomb (120) adaptées pour loger dans le support de batterie de 482,6 mm ou 584,2 mm de large et 400 mm ou 600 mm de profondeur.
